# EUROPEAN PATENT APPLICATION

(11) **EP 4 481 648 A1**
(43) Date of publication of application: **25.12.2024**
(21) Application number: 24183177.5
(22) Date of filing: 19.06.2024
(51) Int. Cl.: G06Q 10/08, G06Q 10/0832

(54) **METHOD AND SYSTEM FOR EVALUATING CONDITION OF PERISHABLE GOODS USING DIGITAL TWIN**

(30) Priority: 20.06.2023 US 202363509066 P
(71) Applicant: Carrier Corporation, Palm Beach Gardens, FL 33418 (US)
(72) Inventor: The designation of the inventor has not yet been filed
(74) Representative: Dehns

(57) **Abstract**

Embodiments of the invention describes a system and a method (300) for evaluating the condition of perishable goods inside a refrigeration container (103) of a vehicle (100), using a digital twin. According to an embodiment the method (300) includes performing (305) a simulation process to simulate at least one refrigeration compartment (103) by using a digital twin model that characterizes a variability of vehicle parameters, food parameters, and conditions related to at least a specific operation to a transport of the perishable goods and initial storage conditions. The method (300) includes periodically evaluating (307) a current quality condition of the perishable items based on a result of the simulation process and a plurality of predefined evaluation parameters and comparing (309) a result of evaluation with a threshold value associated with a current quality condition of the perishable items. The method (300) includes predicting (311) an impact on the current quality condition of the perishable items based on a result of comparison and provide a recommendation.

## Description

### CROSS REFERENCE TO RELATED APPLICATION

This application claims the benefit of U.S. Provisional Patent Application No. 63/509,066 filed on June 20, 2023, which is incorporated by reference herein in its entirety.

### FIELD OF THE INVENTION

**The** disclosure relates to the field of transportation of perishable goods, and more particularly relates to a method and system for evaluating and/or predicting condition of perishable goods inside a refrigeration compartment of a vehicle.

### BACKGROUND

Evaluating the condition of perishable items in shipments is critical to ensure the quality and safety of the perishable items. Conventionally, the condition of such perishable items is evaluated based on monitoring air and/or food pulp temperature history during transit, manually measuring sample pulp temperatures upon arrival, and performing additional manual inspections. According to one conventional method, a few arbitrary samples of perishable goods are selected to perform the manual evaluation process, as routine samples of a large (or all) number of perishable goods are operationally impractical. Due to the consideration of such a few arbitrary samples for evaluation, only problems related to such arbitrary samples may be captured. However, the non-evaluated samples of perishable goods may have some (major) problems, which may be entirely missed due to the non-consideration of such samples during the evaluation process. Further, the sampling of the few arbitrary samples may provide misleading output. Also, routine sampling of large samples is operationally impractical. Accordingly, more extensive inspections and evaluation processes are required to be performed.

In view of the above, it would be advantageous to provide a method and system that can automatically evaluate the condition of perishable goods during the shipment of multiple quality attributes.

### SUMMARY

This summary is provided to introduce a selection of concepts, in a simplified format, that are further described in the detailed description of the disclosure. This summary is neither intended to identify key or essential inventive concepts of the disclosure and nor is it intended for determining the scope of the disclosure.

Disclosed herein is a method for evaluating the condition of perishable goods inside the refrigeration container of the vehicle, using a digital twin. The method includes obtaining first information including real time temperature data and sensor data. The method further includes receiving, based on one of a user input or an acquisition from a remote database, second information associated with vehicle parameters including a vehicle type and load conditions of one or more shipments that are planned for a specific transit trip. Thereafter, the method includes performing based on the received first information and the received second information, a simulation process to simulate at least one refrigeration compartment by using a digital twin model that characterizes a variability of the vehicle parameters and initial storage conditions of the perishable items during the specific transit trip. The method further includes periodically evaluating a current quality condition of the perishable items during the specific transit trip based on a result of the simulation process and a plurality of predefined evaluation parameters. The method further includes comparing a result of the periodical evaluation with a threshold value associated with the current quality condition of the perishable items. Thereafter, the method includes predicting an impact on the current quality condition of the perishable items based on a result of comparison. The method further includes providing a recommendation, via a user interface, based on the predicted impact on the current quality condition of the perishable items.

Optionally, the simulation process includes generating, using the digital twin model, a virtual configuration of the at least one refrigeration compartment based on the first information and the second information. The at least one simulated refrigeration compartment depicts at least the virtual configuration of the refrigeration compartment, a virtual loading configuration of the perishable items in the refrigeration compartment, a standard operating procedure (SOP) associated with an arrangement of the perishable items in the virtual configuration of the refrigeration compartment during an event of the specific transit trip of the vehicle.

Optionally, the method may further include calculating, using the digital twin model, a plurality of quality metrics for the perishable items based on the received first information and the second information. The plurality of quality metrics corresponds to a mass loss, a quality loss, a shelf-life loss, a temperature value of each of the perishable items in the refrigeration compartment at different time intervals throughout the transport, loss of usable post-harvest life of the perishable items, a current state of the perishable items with respect to an initial conditions, a risk of degradation in quality of the perishable items due to the temperature inside the refrigeration compartment, and a risk of pathogen growth on a surface of the perishable items due to the temperature inside the refrigeration compartment. Further, the state of the perishable items is determined based on a plurality of measurement parameters related to an abnormal temperature inside the refrigeration compartment, a condensation inside the refrigeration compartment, a water loss in the perishable items, and the pathogen growth on the surface of the perishable items. Further, the current quality condition of the perishable items is evaluated based on the calculated plurality of quality metrics.

Optionally, the method may further include providing a performance score to the virtual configuration of the at least one refrigeration compartment based on the calculation of the plurality of quality metrics and the predefined evaluating parameters. The prediction of the impact on the current condition of the perishable items is based on the provided performance score.

Optionally, the method further includes performing the simulation process in response to a user input or a triggering event at one or more particular instants of the specific transit of the perishable items.

Optionally, the simulation process is performed prior to the specific transit trip, at one or more particular instants during the specific transit trip, and after a completion of the specific transit trip.

Optionally, the real time sensor data includes data related to air quality inside the at least one refrigeration compartment, presence of gases inside the at least one refrigeration compartment, and geo-location data of the vehicle, wherein the real time temperature data includes an internal air temperature value of the at least one refrigeration compartment. The vehicle parameters are related to the load conditions include data related to the arrangement pattern of the perishable items, a packaging of the perishable items, a quantity/volume of the perishable items loaded inside the vehicle, and a loading pattern of the perishable items.

Optionally, the method may further include identifying a geo location of the vehicle or a specific region within the refrigeration compartment for which a value of the periodically evaluated current quality condition of the perishable items is below the threshold value and then providing, via a user input, a recommendation associated with an inspection of the perishable item at the identified geo- location.

Optionally, the vehicle parameters include parameters that are set by a user of the vehicle prior to the specific transit trip, at one or more particular instants during the specific transit trip, or after the completion of the specific transit trip.

Optionally, the second information associated with vehicle parameters includes information regarding one or more shipments that are planned for the specific transit trip includes information related to a planned route to be taken for the specific transit trip, information related to stops to be taken for the specific transit trip, information related to a duration of stops to be taken for the specific transit trip, a number of times doors are opened and closed by the user, a duration for which the doors were kept open by the user, and a potential route taken by the user to complete the one or more shipments in a previous transit trip.

Optionally, the second information associated with vehicle parameters include a vehicle condition that is related to information associated with at least one of a vehicle configuration prior to the specific transit trip, the vehicle configuration at one or more particular instants during the specific transit trip, the vehicle configuration after the completion of the specific transit trip, a volume of the refrigeration compartment, a vehicle geometry, a current condition of internal walls of the refrigeration compartment, presence of debris inside the refrigeration compartment, and a current mode of a Transport Refrigeration Unit (TRU) controlling the refrigeration compartment. The vehicle geometry include data related a size of the vehicle, a weight of the vehicle.

Optionally, the predefined evaluation parameters include a parameter associated with a quality of the perishable items, an efficiency of the vehicle, and a cost involved in the transport of the perishable items.

Optionally, the method may further include receiving, based on the user input or image data of the perishable items, the second information related to food parameters associated with an initial food quality of the perishable items. The method further includes performing, based on the received first information and the received second information, the simulation process to simulate at least one refrigeration compartment by using the digital twin model that characterizes a variability of the food parameters of the perishable items during the specific transit trip.

Also disclosed is a system for evaluating a condition of perishable items. The system includes a server comprising at least one processor coupled with at least a memory, a remote database, and a cloud database. The server is further coupled wirelessly with a vehicle that includes a transport refrigeration unit (TRU) and a human machine interface (HMI). The at least one processor is configured to obtain first information including real time temperature data, sensor data. Thereafter, the at least one processor is configured to receive, based on one of a user input or an acquisition from a remote database, second information associated with vehicle parameters including a vehicle type and load conditions of one or more shipments that are planned for a specific transit trip. Thereafter, the at least one processor is configured to perform based on the received first information and the received second information, a simulation process to simulate at least one refrigeration compartment by using a digital twin model that characterizes a variability of the vehicle parameters and initial storage conditions of the perishable items during the specific transit trip. The at least one processor is further configured to periodically evaluate a current quality condition of the perishable items during the specific transit trip based on a result of the simulation process and a plurality of predefined evaluation parameters. Thereafter, the at least one processor is further configured to the compare a result of the periodical evaluation with a threshold value associated with the current quality condition of the perishable items and then predict an impact on the current condition of the perishable items based on a result of comparison. The at least one processor is further configured to provide a recommendation, via a user interface, based on the predicted impact on the current quality condition of the perishable items.

Optionally, the at least one processor is configured to generate, using the digital twin model, a virtual configuration of the at least one refrigeration compartment based on the first information and the second information. The at least one simulated refrigeration compartment depicts at least the virtual configuration of the refrigeration compartment, a virtual loading configuration of the perishable items in the refrigeration compartment, a standard operating procedure (SOP) associated with an arrangement of the perishable items in the virtual configuration of the refrigeration compartment during an event of the specific transit trip of the vehicle.

Optionally, the at least one processor is configured to calculate, using the digital twin model, a plurality of quality metrics for the perishable items based on the received first information and the second information. The plurality of quality metrics corresponds to a mass loss, a quality loss, a shelf-life loss, a temperature value of each of the perishable items in the refrigeration compartment at different time intervals throughout the transport, loss of usable post-harvest life of the perishable items, a current state of the perishable items with respect to an initial conditions, a risk of degradation in the quality of the perishable items due to the temperature inside the refrigeration compartment, and a risk of pathogen growth on a surface of the perishable items due to the temperature inside the refrigeration compartment. The state of the perishable items is determined based on a plurality of measurement parameters related to an abnormal temperature inside the refrigeration compartment, a condensation inside the refrigeration compartment, a water loss in the perishable items, and the pathogen growth on the surface of the perishable items. The current quality condition of the perishable items is evaluated based on the calculated plurality of quality metrics.

Optionally, the at least one processor is configured to provide a performance score to the virtual configuration of the at least one refrigeration compartment based on the calculation of the plurality of quality metrics and the predefined evaluating parameters. The prediction of the impact on the current condition of the perishable items is based on the provided performance score.

Optionally, the at least one processor is configured to perform the simulation process in response to a user input or a triggering event at one or more particular instants of the specific transit of the perishable items.

Optionally, the simulation process is performed prior to the specific transit trip, at one or more particular instants during the specific transit trip, and after a completion of the specific transit trip.

Optionally, the real time sensor data includes data related to air quality inside the at least one refrigeration compartment, presence of gases inside the at least one refrigeration compartment, and geo-location data of the vehicle, wherein the real time temperature data includes an internal air temperature value of the at least one refrigeration compartment. The vehicle parameters are related to the load conditions include data related to the arrangement pattern of the perishable items, a packaging of the perishable items, a quantity/volume of the perishable items loaded inside the vehicle, and a loading pattern of the perishable items.

Optionally, the at least one processor is configured to identify a geo location of the vehicle or a specific region within the refrigeration compartment for which a value of the periodically evaluated current quality condition of the perishable items is below the threshold value and then provide, via a user input, a recommendation associated with an inspection of the perishable item at the identified geo- location.

Optionally, the vehicle parameters include parameters that are set by a user of the vehicle prior to the specific transit trip, at one or more particular instants during the specific transit trip, or after the completion of the specific transit trip.

Optionally, the second information associated with vehicle parameters includes information regarding one or more shipments that are planned for the specific transit trip includes information related to a planned route to be taken for the specific transit trip, information related to stops to be taken for the specific transit trip, information related to a duration of stops to be taken for the specific transit trip, a number of times doors are opened and closed by the user, a duration for which the doors were kept open by the user, and a potential route taken by the user to complete the one or more shipments in a previous transit trip .

Optionally, the second information associated with vehicle parameters include a vehicle condition that is related to information associated with at least one of a vehicle configuration prior to the specific transit trip, the vehicle configuration at one or more particular instants during the specific transit trip, the vehicle configuration after the completion of the specific transit trip, a volume of the refrigeration compartment, a vehicle geometry, a current condition of internal walls of the refrigeration compartment, presence of debris inside the refrigeration compartment, and a current mode of a Transport Refrigeration Unit (TRU) controlling the refrigeration compartment. The vehicle geometry include data related a size of the vehicle, a weight of the vehicle.

Optionally, the predefined evaluation parameters include a parameter associated with a quality of the perishable items, an efficiency of the vehicle, and a cost involved in the transport of the perishable items.

Optionally, the at least one processor is configured to receive, based on the user input or image data of the perishable items, the second information related to food parameters associated with an initial food quality of the perishable items. The at least one processor is configured to perform, based on the received first information and the received second information, the simulation process to simulate at least one refrigeration compartment by using the digital twin model that characterizes a variability of the food parameters of the perishable items during the specific transit trip.

To further clarify the advantages and features of the methods, systems, and apparatuses, a more particular description of the methods, systems, and apparatuses will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

### BRIEF DESCRIPTION OF THE DRAWINGS

These and other features, aspects, and advantages will become better understood when the following detailed description is read with reference to the accompanying drawings in which like characters represent like parts throughout the drawings, wherein:
**FIG. 1A** illustrates a vehicle with a refrigeration compartment;
**FIG. 1B** illustrates an example of the refrigeration compartment;
**FIG. 2** illustrates a block diagram of the server;
**FIG. 3** illustrates a flow diagram for evaluating the condition of perishable items inside a refrigeration compartment;
**FIG. 4A** illustrates an example of a simulated digital twin model;
**FIG. 4B** illustrates various examples of simulated virtual configurations of the refrigeration compartments;
**FIG. 5** illustrates an example of a virtual modeling of a chute configuration; and
**FIG. 6** illustrates an exemplary hardware configuration of the electronic control unit (ECU).

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the invention. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the invention. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Embodiments of the invention will be described below in detail with reference to the accompanying drawings.

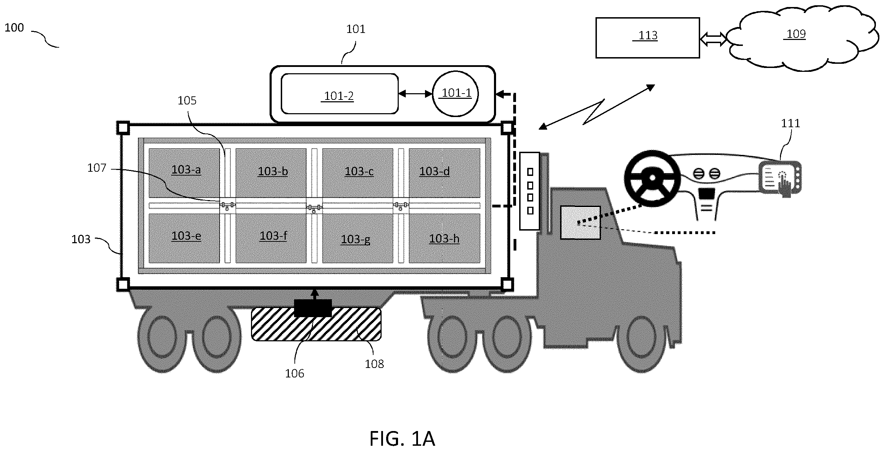

**FIG. 1A** illustrates a vehicle 100 with a refrigeration compartment, in accordance with an embodiment of the invention. In a non-limiting example, the vehicle 100 may be a petrol vehicle, diesel vehicle, compressed natural gas (CNG) vehicle, electric vehicle, and the like.

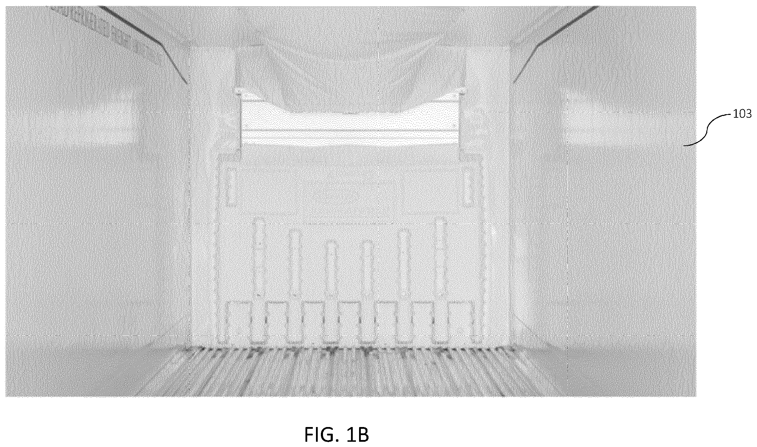

The vehicle 100 comprises a transportation refrigeration unit (TRU) 101 coupled with a refrigerated compartment 103. The vehicle 100 further comprises an engine 108, and an electronic control unit (ECU) 106 coupled with each other. In a non-limiting example, the vehicle 100 comprises one or more refrigerated compartments shown as 103a-103h in FIG. 1 of the drawings. The one or more refrigerated compartments 103a-103h are collectively and interchangeably referred to as 103 for ease of explanation. The one or more perishable items that are to be transported are stored inside the refrigerated compartment 103. For each of the refrigerated compartments 103a-103h has a corresponding door 105. Each door 105 of the refrigerated compartments 103 includes a latch 107, using which the door 105 can be opened and closed by the user. An example of the refrigerated compartment is illustrated in FIG.1B.

According to an embodiment, the TRU 101 comprises a compressor 101-1 and a power supply system 101-2. The TRU 101 is configured to cool the refrigerated compartment 103. The compressor 101-1 may correspond to a cooling compressor. In addition to the compressor 101-1, the TRU 101 may also comprise a cooling fan to cool the refrigerated compartment 103, and a heating device for defrosting and heating the refrigerated compartment 103 The heating device may correspond to at least one of a heating compressor or an electrical heater. As an example, a type of the compressor 101-1 depends on the TRU 101 and may vary depending upon a type of container of the TRU 101.

During the driving mode of the vehicle 100, the engine 108 is configured to provide power to the TRU 101 through the power supply system 101-2 so that the TRU 101 can maintain a temperature of the refrigerated compartment 103. As the items are perishable, therefore, the TRU 101 maintains an appropriate temperature inside the refrigerated compartment 103. In one embodiment, the temperature may be automatically set by the TRU 101 before a specific transit trip of the perishable items. In another embodiment, the temperature of the refrigerated compartment 103 may also be set manually by the user of the vehicle before the start of the specific transit trip of the perishable item or during the transit trip.

According to an embodiment, the ECU 106 of the vehicle 100 may comprise one or more controllers (not shown in FIG. 1) configured to control the overall operation mode of the vehicle 100. Further, the ECU 106 is configured to communicate wirelessly with a server 113 and a cloud database 109. According to an embodiment, the ECU 106 is configured to obtain, from the TRU 101, a real time temperature data and a real time sensor data. According to an embodiment, the server 113 is configured to receive such temperature and sensor data. The aforesaid information may be alternatively referred to as first information, throughout the disclosure without deviating from the scope of the invention.

The power supply system 101-2 is configured for powering the compressor 101-1. The power supply system 101-2 comprises a controller (not shown) configured to control the operation of the power supply system 101-2 to provide power to the compressor 101-1 and the cooling fan 101-1. The controller is configured to operate the power supply system 101-2 to continuously draw power from the engine 108 to operate the compressor 101-1 and the cooling fan 101-1 to maintain a temperature environment within the refrigerated compartment 103. The controller is configured to communicate with the ECU 106 via a Controller Area Network (CAN) bus (not shown in FIG. 1). The CAN bus is commonly used in relation to vehicle systems and, advantageously, the controller of the power supply system 101-2 can make use of a pre-existing bus connection of the vehicle 100. According to some embodiment, the ECU 106 may be communicatively connected with a data logger (not shown) for obtaining various data of the refrigeration compartment 103. According to an embodiment, the data logger may be an Internet of Thing (IoT) device that is placed inside the refrigeration compartment 103. According to some embodiments, the data logger may include sensors to obtain various data related to real time sensor data, temperature data, humidity data, location data and the like.

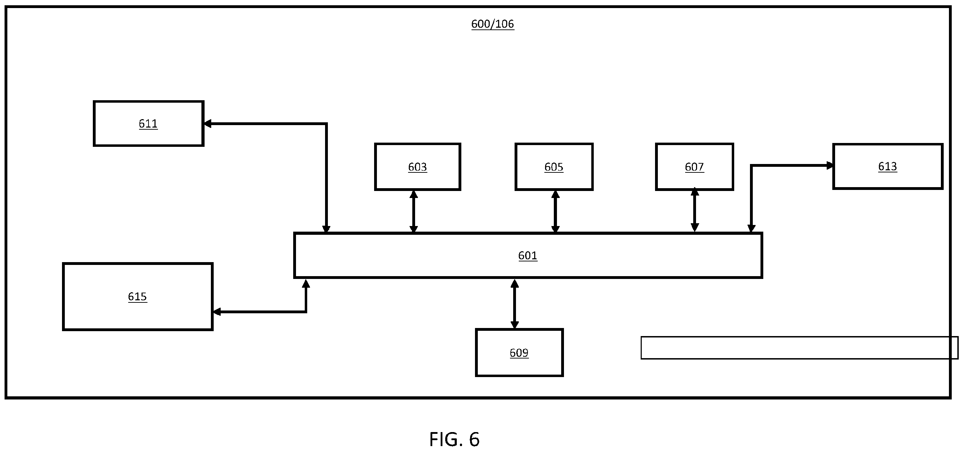

The TRU 101 may also include a plurality of sensors (not shown) to measure temperature and pressure inside the refrigeration compartment 103. According to some embodiment, the plurality of sensors may be installed outside TRU 101, but inside the container. The plurality of sensors may include, but not limited to, a compressor discharge and suction pressure measurement sensors, temperature sensors, evaporator leaving temperature sensors, and supply, return, and ambient air temperature sensors, gas sensors, ethylene sensors, and the like. The ECU 106 may further comprise a transceiver (e.g., a communication interface as shown in FIG. 6) that provides various real time data related to load conditions either to the server 113, or uploads to the cloud database 109, or a remote server (not shown). According to some embodiment, the data logger, the TRU, or sensors that are installed outside the TRU 101 may be configured to measure temperature and pressure inside the refrigeration compartment 103.

In a non-limiting example, the real time sensor data, that may be obtained from the data logger, the TRU, or sensors that are installed outside the TRU 101. The real time sensor data includes data related to the indoor air quality of the at least one refrigeration compartment 103 (quality of air inside the refrigeration compartment), internal air temperature value of the at least one refrigeration compartment 103, a presence of gases inside the at least one refrigeration compartment, and/or geo-location data of the vehicle 100. As an example, the indoor air quality of the at least one refrigeration compartment 103 may be related to humidity content of the air inside the refrigeration compartment 103. The gas sensors may be configured to detect presence of various gases inside the at least one refrigeration compartment 103. The gases may include carbon dioxide, nitrogen, and the like. Further, the ethylene sensors may be configured to detect presence of ethylene gas inside the at least one refrigeration compartment. According to an embodiment, the detection of gases inside the at least one refrigeration compartment 103 may be used as an input to analyze quality condition of the perishable items. For example, the detection of presence of various gases may provide an information about a level of ripeness of the perishable items, which may further help in the analysis of the quality condition of the perishable items.

In a non-limiting example, the indoor air quality indicates part per million (ppm) level of air pollutants inside the refrigeration compartment 103. In another non-limiting example, the internal air temperature value of the refrigeration compartment 103 indicates the temperature of the air inside the refrigeration compartment 103, and the geo-location data of the vehicle 100 indicates a current, past, or next upcoming location of the vehicle 100.

In a further non-limiting example, the real time temperature data may include the internal air temperature value of the at least one refrigeration compartment 103 that may be obtained from the data logger, the TRU, or sensors that are installed outside the TRU 101.

In a non-limiting example, the information related to the load conditions includes data related to the arrangement pattern of the perishable items inside the refrigeration compartment 103, a packaging of the perishable items, a quantity/volume of the perishable items loaded inside the vehicle, and/or a loading pattern of the perishable items.

In a non-limiting example, the arrangement pattern of the perishable items referred herein, indicates how the perishable items are arranged for the specific transit trip. In a non-limiting example, during the specific transit trip for food items including vegetables, the leafy vegetables may be arranged at the top section of the refrigeration compartment 103 and solid vegetables (e.g., potatoes) may be arranged in the bottom section of refrigeration compartment 103 to avoid any damages and quality issues during a shipment. In a further non-limiting example, the type of the vehicle 100 referred herein, may correspond to one of an electric vehicle, hybrid vehicle, CNG-based vehicle, petrol vehicle, diesel vehicle, and the like. In a yet further non-limiting example, the size of the vehicle 100 herein corresponds to a light commercial vehicle (LCV), a light rigid vehicle, a heavy commercial vehicle having a large trailer, a vehicle having a semi-trailer (Articulated Truck), and the like. Further, in a non-limiting example, the volume of the perishable items loaded in the vehicle 100 referred herein, may indicate the quantity of the perishable items loaded in the vehicle 100.

According to an embodiment, the server 113 may correspond to any conventional server. Various monitoring systems or computer system(s) may access the server 113 via internet or by any wireless communication medium. The server 113 here refers to any physical server or a virtual server that interacts with one or more computer systems having one or more processors. Such an arrangement may also refer to as a cloud that may be implemented in a scalable manner. As a further example, the processors may be virtually implemented in the server 113. The server 113 may be configured to wirelessly communicate with the cloud database 109.

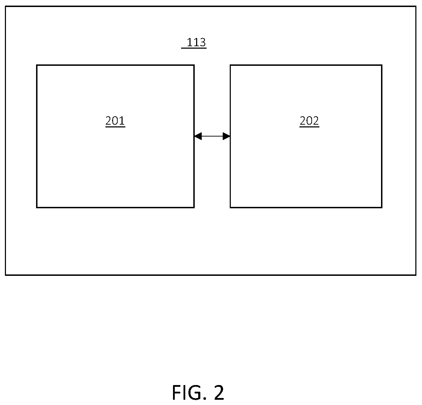

**FIG. 2** shows a block diagram of the server, according to an embodiment of the invention. The server 113 may comprise one or more processors 201 coupled with a memory 202. Further, the server 113 may be communicatively coupled with the cloud database 109.

In an example, the processor 201 may be a single processing unit or a number of units, all of which could include multiple computing units. The processor 201 may be implemented as one or more microprocessors, microcomputers, microcontrollers, digital signal processors, central processing units, logical processors, virtual processors, state machines, logic circuitries, and/or any devices that manipulate signals based on operational instructions. Among other capabilities, the processor 201 is configured to fetch and execute computer-readable instructions and data stored in the memory 202.

As a further example, the cloud database 109 may be implemented as a combination of hardware and software. The cloud database 109, amongst other things, serves as a repository for storing data processed, received, and generated by one or more of the processors 201, and or the vehicle 100 or any other remote server or a remote database.

The memory 202 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

Referring back to FIG. 1, the vehicle 100 may further comprise a Human Machine Interface (HMI) 111 configured to display messages or notifications about a current condition of perishable items. Further, the ECU 106 is configured to receive an information based on user input or acquire the information from a remote database/cloud database 109 via the HMI 111 when the user interacts with the HMI 111. According to an example embodiment, the information associated with vehicle parameters may be inputted by the user as the user input to the HMI. According to an example scenario, the vehicle parameters may be directly received through the user input or estimated based on the user input. For example, if the user provides user input as a vehicle type, then based on the vehicle type, the vehicle parameters may be estimated. For example, consider that a user has provided an input that the vehicle type is a truck, then the vehicle parameters may be estimated according to a standard truck configuration.

According to an embodiment, the server 113 is configured to receive this information. The aforesaid information may be alternatively referred as a second information throughout the disclosure without deviating from the scope of the invention.

In a non-limiting example, the second information is associated with the vehicle parameters is related to parameters that are set by a user of the vehicle prior to the specific transit trip. Further, the vehicle parameters are related to one or more particular instants during the specific transit trip, or after the completion of the specific transit.

In a non-limiting example, the second information associated with the vehicle parameters includes a number of times the doors 105 are opened and closed by the user, a duration for which the doors 105 were kept open by the user, and a potential route taken by the user to complete the one or more shipments in a previous transit trip and the like. In an example scenario, the ECU 106 may provide the potential route that was driven by the vehicle 100 for the specific transit trip to the server 113. Further, the number of times the doors 105 are opened and closed by the user before, during and after the completion of the specific transit trip.

In a further non-limiting example, the second information associated with the vehicle parameters includes the information regarding one or more shipments that are planned for the specific transit trip. The information regarding one or more shipments includes information related to a planned route to be taken for the specific transit trip, information related to stops to be taken for the specific transit trip, information related to a duration of stops to be taken for the specific transit trip, and information related to loading pattern of the perishable items for the specific transit trip. Further, the user may provide various data regarding one or more shipments that are planned for the specific transit trip. The data may include the time and date of the shipments.

In a further non-limiting example, the second information associated with the vehicle parameters includes the information regarding vehicle condition, such as a vehicle configuration prior to the specific transit trip, at one or more particular instances during the specific transit trip, or after the completion of the specific transit trip, a volume of the refrigeration compartment, a current condition of internal walls of the refrigeration compartment, presence of debris inside the refrigeration compartment, a current mode of the TRU 101 controlling the refrigeration compartment, and the like.

In a further non-limiting example, the second information associated with the vehicle parameters includes information related to the vehicle geometry such as a size of the vehicle, weight of the vehicle, and the like.

According to some embodiments, based on the user input or image data of the perishable items, the ECU 106 may be configured to receive the second information related to food parameters associated with an initial food quality of the perishable items. According to an example embodiment, the image data of the the perishable items that is loaded in the vehicle may be captured prior to the transit trip. Thus, the captured image may be analyzed to obtain the initial food quality of the perishable items prior to the shipment. As an example, the food parameters may include information related to different attributes of the perishable items. The different attributes of the perishable items may include, but not limited to, firmness of the perishable items, sugar content of the perishable items, a level of injury occurred due to chilling, a level of freshness of the perishable items, a level of deviation of color and size of the perishable items, and the like.

According to an embodiment, a digital representation of the refrigeration compartment 103 is used to simulate the inside environment of the refrigeration compartment 103. A digital twin model is used to simulate the inside environment of the refrigeration compartment 103. According to an embodiment, the digital twin model is a physic-based model capable of predicting the condition of perishable products anywhere within an enclosed storage area and characterizing the variability with respect to the vehicle parameters, food parameters and initial storage conditions within entire shipments. The digital twin models are applied as virtual representations of temperature sensitive products. According to an embodiment, the digital twin model is implemented in the server 113 for predicting the condition of perishable products and simulating the inside environment of the refrigeration compartment 103. The digital twin of the refrigeration compartment 103 simulates conditions about equipment configuration, loading configuration, standard operating process (SOPs), and trip events to evaluate performance and potential problems enabling the optimization of loading configuration and unit operation to maximize quality/reduce losses. A detailed working of the invention will be explained in the forthcoming paragraphs.

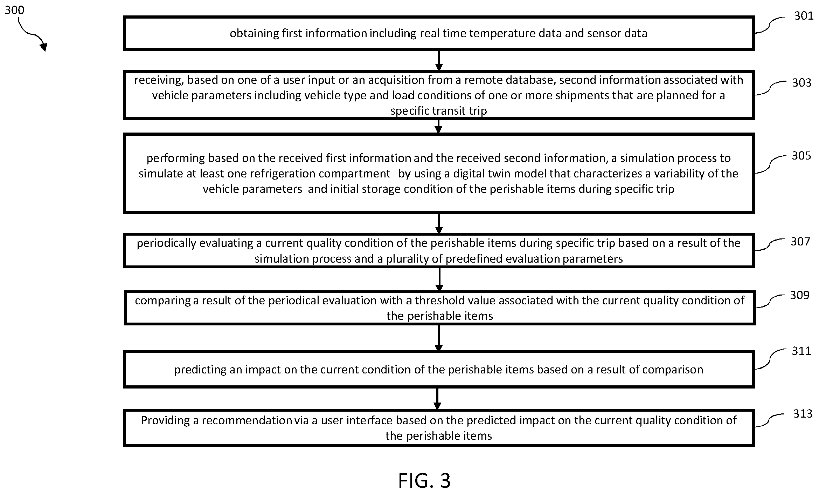

**Fig. 3** illustrates a flow diagram depicting a method 300 for evaluating the condition of perishable items inside a refrigeration compartment, according to an embodiment of the invention. According to an embodiment, the method 300 is implemented in the server 113. Further, it should be understood that the method 300 is implemented using the processor 201 and memory 202 in communication with one or more components of the vehicle 100 and the cloud database 109, according to the invention.

**At step 301** of the method 300, the processor 201 of the server 113 is configured to obtain, from the TRU 101, the first information including the real time temperature data, and sensor data. The examples of the first information are explained in detail above, and therefore, for the sake of brevity, the same has been omitted here. Thereafter, **at step 303** of the method 300, the processor 201 of the server 113 is configured to receive, based on one of the user input or an acquisition from a remote database, the second information including information associated with vehicle parameters, such as the vehicle type, the load conditions of the one or more shipments that are planned for the specific transit trip. The examples of the second information are explained in detail above, and therefore, for the sake of brevity, the same has been omitted here.

After receiving the first information and the second information, at **step 305** of the method 300, the processor 201 of the server 113 is configured to perform, based on the received first information and the received second information, a simulation process to simulate at least one refrigeration compartment 103 by using a digital twin model. The simulated digital twin model characterizes a variability of the vehicle parameters and the initial storage conditions of the perishable items during the specific transit trip. The various parameters included in the vehicle parameters are explained in detail above, and therefore, for the sake of brevity, the same has been omitted here. The storage conditions may include, but not limited to, various storage configuration like arrangement of the perishable items, temperature at which the perishable items are stored, initial quality condition of the perishable items, current quality condition of the perishable items at any instance during the specific transit trip, and the like.

According to some embodiments, the simulated digital twin model characterizes a variability of the food parameters of the perishable items during the specific transit trip.

According to an embodiment, the simulation process comprises generating a virtual configuration of the at least one refrigeration compartment based on the first information and the second information by using the digital twin model.

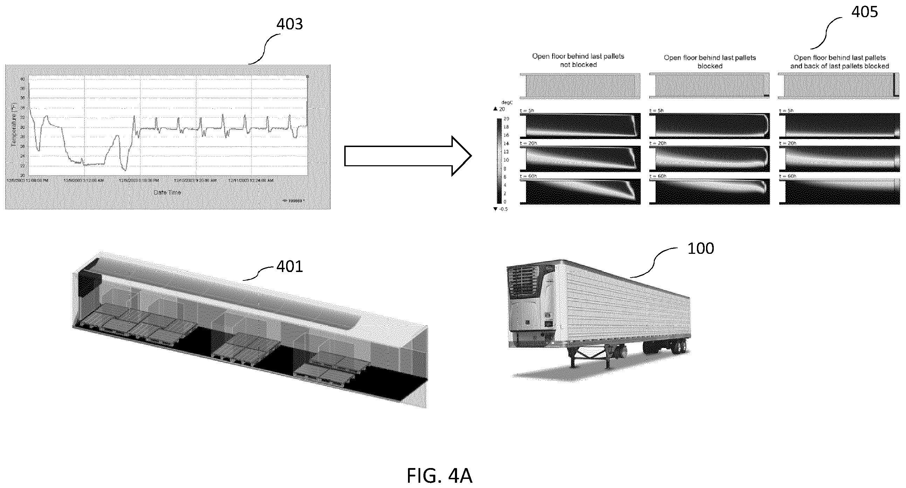

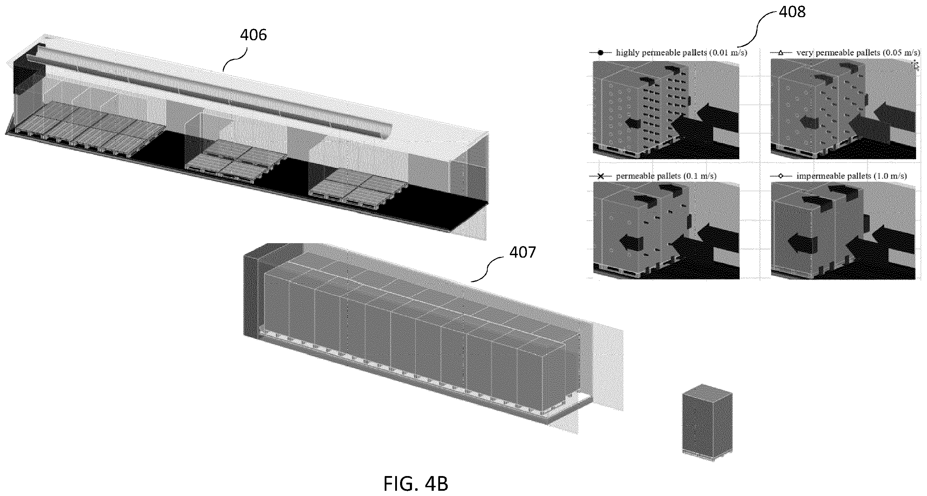

**Fig. 4A** illustrates an example of a simulated digital twin model, according to an embodiment of the invention. Fig. 4 shows the simulated refrigeration compartment in blocks 401 and 405. According to an embodiment, the simulated refrigeration compartment in blocks 401 and 405 depicts a virtual configuration of the refrigeration compartment, a virtual loading configuration of the perishable items in the refrigeration compartment, a standard operating procedure (SOP) associated with an arrangement of the perishable items in the virtual configuration of the refrigeration compartment during an event of the specific transit trip of the vehicle.

In a non-limiting example, the virtual configuration of the refrigeration compartment 103 may depict a virtual configuration or a virtual modeling of inner wall, chutes, perishable items and the like. In yet further non-limiting example, the virtual loading configuration of the perishable items in the refrigerated compartment depicts the virtual configuration or the virtual modeling of an arrangement of the perishable items. Various examples of simulated virtual configurations of refrigeration compartments are shown in the **Fig. 4B****.** Blocks 406, 407, and 408 illustrate virtual configuration of an inner side of the refrigeration compartment, virtual configuration of an outer side of the refrigeration compartment, virtual loading configuration of the perishable items in the refrigerated compartment respectively. This is helpful to determine how the perishable items are placed inside the refrigerated container. In yet further non-limiting example, the virtual configuration or the virtual modeling may depict one or more standard operating procedures (SOPs) associated with the arrangement of the perishable items. Referring back to the figure 4B block 408 illustrates virtual configuration of SOPs associated with the arrangement of the perishable items. As an example, the SOPs may be related to but not limited to, pre-cooling, packaging, palletizing, loading of the perishable items. The SOPs may be related to, but not limited to, condition and maintenance of equipment of the vehicle, temperature maintained during the transit, and the like.

Thus, as can be seen from Fig. 4A and Fig. 4B, the simulated refrigeration compartments in blocks 401 through 408 depict variability with respect to the vehicle parameters and storage scenarios of the perishable items. In a non-limiting example,

FIG. 4B in block 408 depicts various pallets configuration in the simulated refrigeration compartments. The result of simulation further depicts a highly permeable pallets, very permeable pallets, permeable pallets, impermeable pallet.

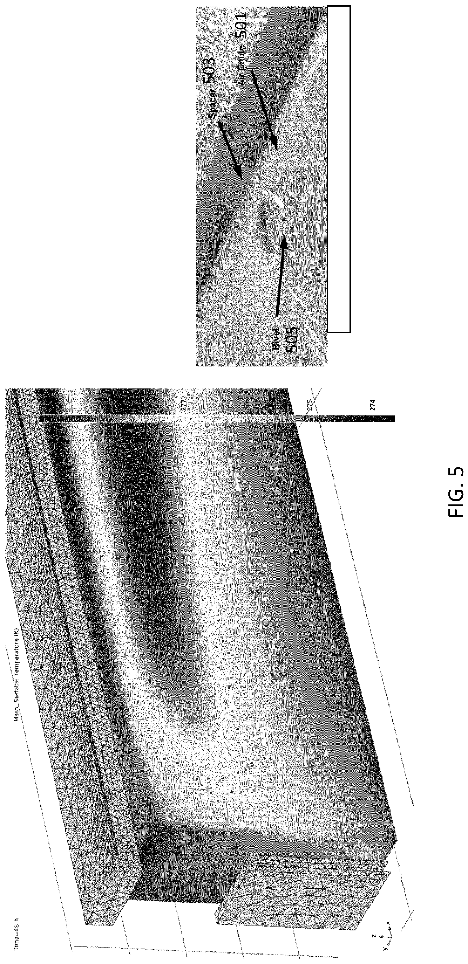

**Fig. 5** illustrates another example of a virtual modeling of a chute configuration, according to an embodiment of the invention. In a non-limiting example, a virtual modelling of an air chute 501, spacer 503, and rivet 505 is depicted in Fig. 5. Based on the virtual modeling for example of a chute configuration, the vehicle condition during the transit can be evaluated. Accordingly, the conditions of the perishable items may be determined.

According to an embodiment, the simulation process is performed in response to the user input or a triggering event at any particular instant(s) of the specific transit trip of the perishable items. For example, the user may manually provide a command to start the simulation process so that he/she may view the virtual configuration of the perishable item(s) at any particular instant of the specific transit trip, or prior to the specific transit trip or after the specific transit trip. Further, for example, the user may preset the simulation process to trigger the simulation process to perform at regular intervals of time during the specific transit trip, prior to the specific transit trip, or after the specific transit trip. Accordingly, the simulation process is performed prior to the specific transit trip, at one or more particular instants during the specific transit trip, and after the completion of the specific transit trip.

Referring back to Fig. 3, at **step 307** of the method 300, the processor 201 of the server 113 is configured to periodically evaluate a current quality condition of the perishable items based on a result of the simulation process and a plurality of predefined evaluating parameters.

As an example, the evaluation of the quality condition may be related to the different attributes of the perishable items with respect to the initial storage conditions. The different attributes of the perishable items may include, but not limited to, the firmness of the perishable items, the sugar content of the perishable items, the level of injury occurred due to chilling, the level of freshness of the perishable items, the level of deviation of color, size of the perishable items, and the like. The different attributes of the perishable items may be evaluated with respect to the attributes during the initial storage conditions.

As an example, the predefined evaluation parameters include a parameter associated with a quality of the perishable items, an efficiency of the vehicle, and a cost involved in the transport of the perishable items. According to an embodiment, in order to evaluate the condition of the perishable items and how the various factors affect shipment performance in terms of product quality/safety/efficiency/cost attributes, the result of the simulation process is evaluated based on the predefined evaluating parameters. As an example, the predefined evaluation parameters may be set by the user so that quality/safety/efficiency/cost attributes are evaluated on that basis. The evaluation of the simulation process thus helps in optimizing each transit trip.

According to some embodiments, the processor 201 of the server 113 is configured to identify a geo location of the vehicle or a specific region within the refrigeration compartment at which a value of the periodically evaluated current condition of the perishable items is below the threshold value.

According to an embodiment, for evaluation, the processor 201 of the server 113 is configured to calculate, using the digital twin model, a plurality of quality metrics for the perishable items based on the received first information and the second information. In a non-limiting example, the plurality of quality metrics corresponds to a mass loss, a quality loss, a shelf-life loss, a temperature value of each of the perishable items in the refrigeration compartment at different time intervals throughout the transport, loss of usable post-harvest life of the perishable items, a current state of the perishable items with respect to the initial conditions, a risk of degradation in quality of the perishable items due to the temperature inside the refrigeration compartment, and a risk of pathogen growth on a surface of the perishable items due to the temperature inside the refrigeration compartment.

In a further non-limiting example, the state of the perishable items is determined based on a plurality of measurement parameters related to an abnormal temperature inside the refrigeration compartment, a condensation inside the refrigeration compartment, a water loss in the perishable items, and the pathogen growth on the surface of the perishable items.

Further, at **step 309** of the method 300, the processor 201 of the server 113 is configured to compare a result of evaluation with a threshold value associated with the current quality condition of the perishable items. Accordingly, the current quality condition of the perishable items is evaluated based on the calculated plurality of the quality metrics.

After calculation of the plurality of quality metrics, the processor 201 of the server 113 is configured to provide a performance score to the virtual configuration of the at least one refrigeration compartment 103 based on the calculation of the plurality of quality metrics and the predefined evaluating parameters.

At **step 311** of the method 300, the processor 201 of the server 113 is configured to predict an impact on the current quality condition of the perishable items based on a result of comparison. As an example, the prediction of the impact on the condition of the perishable items is based on the provided performance score.

At **step 313** of the method 300, the processor 201 of the server 113 is configured to provide a recommendation, via a user interface, based on the predicted impact on the current condition of perishable items. As an example, the recommendation may be provided for a quick inspection for the user or generating an alarm for notifying a degrading condition of the perishable items. Further, a recommendation may be provided about changing the configuration/arrangement of the perishable items or changing the temperature value of the refrigeration compartment 103 and the like. In a non-limiting example, the user interface may include a cloud-based user interface or the human machine interface (HMI).

According to an example embodiment, a recommendation of the perishable items may be provided at the identified geo-location based on the evaluation at the step 307. Accordingly, the invention provides notification at the identified geo location or of the specific region within the refrigerated compartment 103 where perishable products may have lower quality metrics. Thus, the notification assures that an immediate attention of the user is required.

Accordingly, the invention allows users to automatically assess the condition of temperature sensitive products in a shipment across multiple quality attributes. Doing such an evaluation in a fast, efficient, and targeted manner lowers cost by reducing manual inspections and making these more meaningful and efficient, when conducted. Further, the use of the digital twin permits conducting a comprehensive virtual inspection to create a digital fingerprint characterizing the variability of the condition of the shipment.

Further, the invention provides an improved quality/safety/cost performance for individual shipments and overall refrigerated transport performance. The invention also offers temperature information about the perishable items and provides insights regarding various factors affecting shipment performance in terms of product quality attributes/safety/efficiency/cost, thereby optimizing the performance of shipment Accordingly, the users shall receive performance predictions prior to the trip, in-transit, and/or post-shipment recommendations.

While the above steps of Figure 3 are shown and described in a particular sequence, the steps may occur in variations to the sequence in accordance with various embodiments of the invention.

**FIG. 6** illustrates an exemplary hardware configuration of the ECU. The ECU 600 is similar in functionality to that of the ECU 106 of FIG. 1.

The ECU 600 includes a controlling unit (CPU 601) that controls various system components including a memory 603, a read-only memory (ROM) 605 and a random-access memory (RAM) 607. The ECU 600 further includes one or more sensors 609 configured to measure the temperature inside the vehicle 100, pressure of the tires of the vehicle 100, speed of vehicle 100, and the like. The one or more sensors 609 may include, but not limited to, temperature sensors, acceleration sensors, motion sensors, gyro sensors, oxygen sensor, air index measurement sensor, intake air temperature sensors, engine coolant temperature sensors, and the like.

The ECU 600 may also include a cache of high-speed memory connected directly with, in close proximity to, or integrated as part of the CPU 601. The CPU 601 copies data from the memory 603 to the cache for quick access. The CPU 601 may essentially be a completely self-contained computing system, containing multiple cores or processors, a bus, a memory controller, a cache, etc. (such as a system-on-chip). A multicore processor may be symmetric or asymmetric.

The ECU 600 may also include a system bus that may be any of several types of bus structures including a memory bus or memory controller, a peripheral bus, and a local bus using any of a variety of bus architectures. The ECU 600 may further include a storage device, such as a hard disk drive, a magnetic disk drive, an optical disk drive, a tape drive, a solid-state drive, or the like as the memory 603. The storage device can include software modules that can be controlled and executed by the CPU 601. The storage device may be connected to the ECU 600 by a drive interface. The drives and the associated computer-readable storage media provide non-volatile storage of computer-readable instructions, data structures, program modules, and other data for the ECU 600. In one aspect, a hardware module that performs a particular function includes the software component stored in a tangible computer-readable storage medium in connection with the necessary hardware components, such as the CPU 601, input device 611, output device 613, and so forth, to carry out the operations of the vehicle 100. The basic components and appropriate variations are contemplated depending on the type of the vehicle.

The ECU 600 may also include a communication interface 615. The communication interface 615 may be connected to a network such as a wireless network. The wireless network may be a cellular telephone network, an IEEE 802.11, 802.16, 802.20, 802.1Q or Worldwide Inter-operability for Microwave Access (WiMax)^{®} network. Further, the network may be a public network, such as the internet, a private network, such as an intranet, or combinations thereof, and may utilize a variety of networking protocols now available or later developed including, but not necessarily limited to, including TCP/IP based networking protocols.

The communication interface 615 may include a transceiver that further includes a transmitter and a receiver for receiving or transmitting data from or to a cloud network used in V2V communication.

While the embodiments discussed above relate to evaluating the condition of perishable goods placed in a refrigerated container(s) of a vehicle, it may be apparent to a person skilled in the art that the embodiments should not be restricted only to evaluating the condition of perishable goods placed in a refrigerated container(s) of a vehicle, without departing from the scope of the present invention.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The following clauses set out features of the invention which may not presently be claimed in this application but which may form the basis for future amendment or a divisional application.
1. A system for evaluating a condition of perishable items, the system comprising:
   a server comprising at least one processor coupled with at least a memory, a remote database, and a cloud database,
   wherein the server is further coupled wirelessly with a vehicle that includes a transport refrigeration unit (TRU) and a human machine interface (HMI), wherein the at least one processor is configured to:
      obtain first information including real time temperature data and sensor data;
      receive, based on one of a user input or an acquisition from the remote database, second information associated with vehicle parameters including a vehicle type and load conditions of one or more shipments that are planned for a specific transit trip;
      perform, based on the received first information and the received second information, a simulation process to simulate at least one refrigeration compartment by using a digital twin model that characterizes a variability of the vehicle parameters, and initial storage conditions of the perishable items during the specific transit trip;
      periodically evaluate a current quality condition of the perishable items during the specific transit trip based on a result of the simulation process and a plurality of predefined evaluation parameters;
      compare a result of the periodical evaluation with a threshold value associated with the current quality condition of the perishable items;
      predict an impact on the current quality condition of the perishable items based on a result of comparison; and
      provide a recommendation, via a user interface, based on the predicted impact on the current quality condition of the perishable items.
2. The system according to clause 1, wherein the at least one processor is further configured to:
   generate, using the digital twin model, a virtual configuration of the at least one refrigeration compartment based on the first information and the second information,
   wherein the at least one simulated refrigeration compartment depicts at least the virtual configuration of the refrigeration compartment, a virtual loading configuration of the perishable items in the refrigeration compartment, a standard operating procedure (SOP) associated with an arrangement of the perishable items in the virtual configuration of the refrigeration compartment during an event of the specific transit trip of the vehicle.
3. The system according to clause 2, wherein the at least one processor is further configured to:
   calculate, using the digital twin model, a plurality of quality metrics for the perishable items based on the received first information and the second information,
   wherein the plurality of quality metrics corresponds to a mass loss, a quality loss, a shelf-life loss, a temperature value of each of the perishable items in the refrigeration compartment at different time intervals throughout the transport, loss of usable post-harvest life of the perishable items, a current state of the perishable items with respect to an initial conditions, a risk of degradation in quality of the perishable items due to the temperature inside the refrigeration compartment, and a risk of pathogen growth on a surface of the perishable items due to the temperature inside the refrigeration compartment,
   wherein the state of the perishable items is determined based on a plurality of measurement parameters related to an abnormal temperature inside the refrigeration compartment, a condensation inside the refrigeration compartment, a water loss in the perishable items, and the pathogen growth on the surface of the perishable items, and
   wherein the current quality condition of the perishable items is evaluated based on the calculated plurality of the quality metrics.
4. The system according to clause 3, wherein the at least one processor is further configured to provide a performance score to the virtual configuration of the at least one refrigeration compartment based on the calculation of the plurality of quality metrics and the predefined evaluating parameters,
   wherein the prediction of the impact on the current quality condition of the perishable items is based on the provided performance score.
5. The system according to clause 1, wherein the real time sensor data includes data related to air quality inside the at least one refrigeration compartment, presence of gases inside the at least one refrigeration compartment, and geo-location data of the vehicle, wherein the real time temperature data includes an internal air temperature value of the at least one refrigeration compartment,
   wherein the vehicle parameters related to the load conditions include data related to the arrangement pattern of the perishable items, a packaging of the perishable items, a quantity/volume of the perishable items loaded inside the vehicle, and a loading pattern of the perishable items.
6. The system according to clause 1, wherein the at least one processor is further configured to:
   identify a geo location of the vehicle or a specific region within the refrigeration compartment for which a value of the periodically evaluated current quality condition of the perishable items is below the threshold value; and
   provide, via the user interface, a recommendation associated with an inspection of the perishable item at the identified geo- location.
7. The system according to clause 1, wherein the at least one processor is further configured to:
   receive, based on the user input or image data of the perishable items, the second information related to food parameters associated with an initial food quality of the perishable items; and
   perform, based on the received first information and the received second information, the simulation process to simulate at least one refrigeration compartment by using the digital twin model that characterizes a variability of the food parameters of the perishable items during the specific transit trip.

## Claims

1. A method (300) for evaluating a condition of perishable items inside a refrigeration compartment (103) of a vehicle (100), the method comprising:
obtaining (301) first information including real time temperature data and sensor data;
receiving (303), based on one of a user input or an acquisition from a remote database, second information associated with vehicle parameters including a vehicle type and load conditions of one or more shipments that are planned for a specific transit trip;
performing (305), based on the received first information and the received second information, a simulation process to simulate at least one refrigeration compartment by using a digital twin model that characterizes a variability of the vehicle parameters, and initial storage conditions of the perishable items during the specific transit trip;
periodically evaluating (307) a current quality condition of the perishable items during the specific transit trip based on a result of the simulation process and a plurality of predefined evaluation parameters;
comparing (309) a result of the periodical evaluation with a threshold value associated with the current quality condition of the perishable items;
predicting (311) an impact on the current quality condition of the perishable items based on a result of comparison; and
providing (313) a recommendation, via a user interface, based on the predicted impact on the current quality condition of the perishable items.

2. The method according to claim 1, wherein performing (305) the simulation process comprises:
generating, using the digital twin model, a virtual configuration of the at least one refrigeration compartment (103) based on the first information and the second information,
wherein the at least one simulated refrigeration compartment depicts at least the virtual configuration of the refrigeration compartment, a virtual loading configuration of the perishable items in the refrigeration compartment, a standard operating procedure (SOP) associated with an arrangement of the perishable items in the virtual configuration of the refrigeration compartment during an event of the specific transit trip of the vehicle (100).

3. The method according to claim 2, further comprising:
calculating, using the digital twin model, a plurality of quality metrics for the perishable items based on the received first information and the second information,
wherein the plurality of quality metrics corresponds to a mass loss, a quality loss, a shelf-life loss, a temperature value of each of the perishable items in the refrigeration compartment (103) at different time intervals throughout the transport, loss of usable post-harvest life of the perishable items, a current state of the perishable items with respect to an initial conditions, a risk of degradation in quality of the perishable items due to the temperature inside the refrigeration compartment, and a risk of pathogen growth on a surface of the perishable items due to the temperature inside the refrigeration compartment,
wherein the state of the perishable items is determined based on a plurality of measurement parameters related to an abnormal temperature inside the refrigeration compartment, a condensation inside the refrigeration compartment, a water loss in the perishable items, and the pathogen growth on the surface of the perishable items, and
wherein the current quality condition of the perishable items is evaluated based on the calculated plurality of quality metrics.

4. The method according to claim 3, further comprising:
providing a performance score to the virtual configuration of the at least one refrigeration compartment (103) based on the calculation of the plurality of quality metrics and the predefined evaluating parameters,
wherein the prediction of the impact on the current quality condition of the perishable items is based on the provided performance score.

5. The method according to any preceding claim, further comprising: performing (305) the simulation process in response to the user input or a triggering event at one or more particular instants during the specific transit of the perishable items.

6. The method according to any preceding claim, wherein the simulation process is performed (305) prior to the specific transit trip, at one or more particular instants during the specific transit trip, and after a completion of the specific transit trip.

7. The method according to any preceding claim, wherein the real time sensor data includes data related to air quality inside the at least one refrigeration compartment (103), presence of gases inside the at least one refrigeration compartment, and geo-location data of the vehicle (100), wherein the real time temperature data includes an internal air temperature value of the at least one refrigeration compartment,
wherein the vehicle parameters related to the load conditions include data related to the arrangement pattern of the perishable items, a packaging of the perishable items, a quantity/volume of the perishable items loaded inside the vehicle, and a loading pattern of the perishable item.

8. The method according to any preceding claim, further comprising:
identifying a geo location of the vehicle (100) or a specific region within the refrigeration compartment (103) for which a value of the periodically evaluated current quality condition of the perishable items is below the threshold value; and
providing, via the user interface, a recommendation associated with an inspection of the perishable item at the identified geo-location.

9. The method according to any preceding claim, wherein the vehicle (100) parameters include parameters that are set by a user of the vehicle prior to the specific transit trip, at one or more particular instants during the specific transit trip, or after the completion of the specific transit trip.

10. The method according to any preceding claim, wherein the second information associated with vehicle (100) parameters includes information regarding one or more shipments that are planned for the specific transit trip includes information related to a planned route to be taken for the specific transit trip, information related to stops to be taken for the specific transit trip, information related to a duration of stops to be taken for the specific transit trip, a number of times doors (105) are opened and closed by the user, a duration for which the doors were kept open by the user, and a potential route taken by the user to complete the one or more shipments in a previous transit trip.

11. The method according to any preceding claim, wherein the second information associated with vehicle (100) parameters includes a vehicle condition that is related to information associated with at least one of a vehicle configuration prior to the specific transit trip, the vehicle configuration at one or more particular instants during the specific transit trip, the vehicle configuration after the completion of the specific transit trip, a volume of the refrigeration compartment (103), a vehicle geometry, a current condition of internal walls of the refrigeration compartment, presence of debris inside the refrigeration compartment, and a current mode of a Transport Refrigeration Unit (TRU) (101) controlling the refrigeration compartment,
wherein the vehicle geometry include data related a size of the vehicle, a weight of the vehicle.

12. The method according to any preceding claim, wherein the predefined evaluation parameters include a parameter associated with a quality of the perishable items, an efficiency of the vehicle (100), and a cost involved in the transport of the perishable items.

13. The method according to any preceding claim, further comprising:
receiving, based on the user input or image data of the perishable items, the second information related to food parameters associated with an initial food quality of the perishable items; and
performing (305), based on the received first information and the received second information, the simulation process to simulate at least one refrigeration compartment (103) by using the digital twin model that characterizes a variability of the food parameters of the perishable items during the specific transit trip.

14. A system for evaluating a condition of perishable items, the system comprising:
a server (113) comprising at least one processor (201) coupled with at least a memory (202), a remote database, and a cloud database (109),
wherein the server is further coupled wirelessly with a vehicle (100) that includes a transport refrigeration unit (TRU) (101) and a human machine interface (HMI) (111), wherein the at least one processor is configured to perform the method of any of claims 1 to 13.
